# EUROPEAN PATENT SPECIFICATION

(11) **EP 1 237 719 B1**
(45) Date of publication and mention of the grant of the patent: **21.04.2004**
(21) Application number: 00965560.6
(22) Date of filing: 01.10.2000
(51) Int. Cl.: B32B 27/32

(54) **HEAT-SEALABLE MULTILAYER WHITE OPAQUE FILM**
HEISSSIEGELBARER WEISSER OPAKER MEHRSCHICHTFILM
FILM OPAQUE BLANC MULTICOUCHE THERMOSCELLABLE

(30) Priority: 13.10.1999 US 159205 P
(43) Date of publication of application: 11.09.2002
(73) Proprietor: EXXONMOBIL OIL CORPORATION, Baytown, TX 77520-5200 (US)
(72) Inventor: KEUNG, Jay, K., Victor, NY 14564 (US); PEREZ, Karen, B., Pittsford, New York 14534 (US); MIGLIORINI, Robert, A., North Haven, CT 06473 (US); WILKINS, Scott, P., Pittsford, NY 14534 (US)
(74) Representative: Dew, Melvyn John
(86) International application number: PCT/US2000/027229
(87) International publication number: WO 2001/026896

(56) References cited:
- EP-A- 0 835 751
- WO-A-98/04403
- WO-A-98/56662

## Description

### BACKGROUND OF THE INVENTION

The present invention relates to multilayer plastic films and, more particularly, to heat sealable multilayer white opaque films suitable for packaging of heat-sensitive items.

Plastic films are currently used in many food packaging operations. To be commercially viable, these plastic films must be economically priced, be compatible with modem high speed packaging machinery and methods, and be suitable for the particular packaging application.

It will be appreciated by those skilled in the art that certain packaging applications, e.g., packaging of heat-sensitive items such as frozen novelties, including ice cream bars and ice cream sandwiches, introduce certain specific design criteria into the packaging operation. These specific design criteria include sealability at low temperature and with minimum applied pressure, a distinctive pleasing appearance with at least one printable surface, and compatibility with high speed packaging, machinery and methods. To date, the prior art has been unable to provide a film exhibiting the aforementioned design criteria suitable for packaging heat-sensitive items such as frozen novelties, including ice cream bars and ice cream sandwiches.

There is therefore a need in the art for a heat sealable multilayer white opaque film which is sealable at low temperature and with a minimum of applied pressure, provides a distinctive pleasing appearance with at least one printable surface, and is compatible with high speed packaging machinery and methods.

EP 0 835 751 A discusses an opaque, biaxially oriented multi-layer polymeric film structure of reduced surface coefficient of friction. The film structure includes: (a) a thermoplastic polymer matrix core layer having a first surface and a second surface, within which is located a strata of voids; positioned at least substantially within a substantial number of the voids is at least one spherical void-initiating particle which is phase distinct and incompatible with the matrix material, the void space occupied by the particle being substantially less than the volume of the void; the population of the voids in the core being such as to cause a significant degree of opacity; (b) at least one thermoplastic polymer intermediate layer having a first surface and a second surface, the second surface of the intermediate layer adhering to at least the first surface of the core layer, the intermediate layer formed from a mixture comprising the thermoplastic polymer, a migratory slip agent and a migratory antistatic agent; and (c) a non-voided thermoplastic skin layer adhering to the first surface of the intermediate layer; wherein the slip agent and the antistatic agent migrate to the outer surface of the skin layer and are effective to reduce the surface coefficient of friction thereof.

### SUMMARY OF THE INVENTION

The present invention, which addresses the needs of the prior art, relates to a heat-sealable multilayer white opaque plastic film which includes a cavitated polypropylene core layer having a first and a second surface. A top tie layer formed of polypropylene and incorporating a whitening agent is positioned adjacent to the first surface of the core layer. A top skin layer of polypropylene, or a polyolefin terpolymer, containing an antiblock agent, overlays the top tie layer. The film also has a polypropylene bottom tie layer positioned adjacent to the second surface of the core layer. A bottom skin layer of a polyolefin terpolymer and one or more antiblock agents or antiblock slip agents is positioned adjacent to the bottom tie layer.

In a first embodiment, the present invention provides a plastic film that is heat sealable on one side. The top (non-sealable) skin layer of the film is formed from polypropylene. The cavitating agent incorporated into the polypropylene core layer is a polybutylene terephthalate polymer. The top and bottom tie layers are formed from polypropylene and the polyolefin polymer of the bottom skin layer is a heat sealable ethylene-propylene-butylene terpolymer. Silicone oil is used as an antiblock agent and the antiblock slip agent is a crosslinked silicone.

In a second embodiment, the present invention provides a plastic film that is heat sealable on both sides. The top skin layer is an ethylene-propylene-butylene terpolymer containing SiO₂ and an antiblock agent. The core layer contains a polybutylene terephthalate cavitating agent, a phosphite antioxidant, and a fluoropolymer as the anti-condensing agent. The polyolefin polymer of the bottom skin layer is an ethylene-propylene-butylene terpolymer, with silicone oil as the antiblock agent, and a crosslinked silicone as the antiblock slip agent.

The present invention also relates to a method of packaging a frozen novelty. The method includes the step of providing a frozen ice cream preparation. The method further includes the additional step of enclosing the ice cream preparation in a heat sealable white opaque multilayer plastic film. Finally, the method includes the step of sealing the film to enclose the frozen ice cream preparation.

Thus, the present invention provides a packaging film which is sealable at a low temperature, and which is suitable for use with heat-sensitive items such as frozen novelties, including ice cream bars and ice cream sandwiches. Furthermore, the new films are compatible with modem high speed packaging machinery and methods, and are receptive to printing and labeling for marketing appeal.

These enhanced properties are achieved because the film of the present invention provides certain desirable characteristics including reduced plate out (wear of machine surfaces due to scouring and abrasion by exposed film components, especially hard additives such as titanium dioxide, TiO₂), and a consistent low coefficient of friction (COF), good hot slip properties and improved hot tack and z-tear resistance for packaging. As a result, the film seals with a minimum of applied heat or pressure and still has a pleasing appearance, with at least one printable surface.

### DETAILED DESCRIPTION OF THE INVENTION

The present invention provides a multilayer white opaque plastic film heat-sealable on one or two sides, with improved hot tack and z-tear resistance characteristics; reduced plate out; a lower and consistent coefficient of friction (COF); good hot slip properties; and with a sealant layer that has a distinctive pleasing appearance. At least one exposed surface of the film is suitable for receiving an image which may be printed or affixed.

The plastic film of the present invention includes ai least five layers. The core layer is the central layer of the five layer film structure. On each surface of the core layer is a tie layer. An outer skin layer is present on each side of the multilayer structure.

Each layer itself is formed from one or more polyolefin polymer compositions. Suitable polyolefin polymers include for example, polypropylene (PP), ethylene-propylene copolymers (EP), and ethylene-propylene-butylene terpolymers (EPB). It will be appreciated that skin layers formed from EP copolymers or EPB terpolymers typically exhibit heat-sealing properties. Thus, a multilayer film having one skin layer formed from heat sealable polymers is heat-sealable on one side, whereas a multilayer film having both skin layers, of a heat sealable polymer is heat-sealable on two sides.

The multilayer polyolefin films of the present invention are opaque, white films. The opacity and whiteness characteristics are due to the presence of whitening agents, particles and cavitation in one or more layers of the film.

Preferably, the core layer of the multilayer film is rendered opaque as a result of cavitations within the layer. This cavitation is accomplished by adding an amount of a cavitating agent to the core layer prior to stretching of the film. When the multilayer film is subsequently stretched, the cavitating agent produces voids in the core layer which engender a characteristic opacity to the film. The cavitating agent may be any substance which is harder than the polyolefin of the layer to which it is added. Suitable cavitating agents include any polymer which is harder than the matrix polymer, such as, for example polybutylene terephthalate (PBT) in a polypropylene (PP) matrix.

The whitening agent or agents, which are incorporated into at least one layer of the film, also contribute to the whiteness and opacity of the films of the present invention. At least one of the tie layers of the film comprises a whitening agent. Alternatively, the whitening agent may be present in two tie layers. Suitable whitening agents include but are not limited to white pigments, such as for example TiO₂, CaCO₃, BaSO₄. ZnS, MgCO₃, clay, talc, kaolin, or any other highly reflective white compound. In a preferred embodiment, the whitening agent is TiO₂. In an even more preferred embodiment, the whitening agent is the TiO₂ product, Millenium RCL4®

Other additives and agents may be suitable for incorporation into one or more layers of the films of the present invention. Additives may be selected from any class of additives, including for example, antioxidants, anti-condensing agents, slip agents, pigments, fillers, foaming agents, flame retardants, photodegradable agents, UV sensitizers or UV blocking agents, crosslinking agents, silicon compounds (e.g. SiO₂) and anti-block agents to name but a few of the many known additives.

Anti-oxidants suitable for incorporation in the films of the present invention may be from any class of anti-oxidant, such as a phosphite, for example Ultranox® 626. The anti-condensing agent may be any anti-condensing agent, for example a fluoropolymer, such as for instance Dyneon® fluoropolymer FX9613. The antiblock agents suitable for use with the films of the present invention may be any antiblock agent, including those which function as antiblock, slip agents, for example a methyl acrylate such as Epostar® MA 1002 (Nippon Shokubai, Osaka, Japan).

The silicon compounds include various forms of SiO₂, which may be for example, in the form of coated or uncoated silica including for example, Sylobloc® 44 and Sylobloc® 45, respectively, supplied by W.R. Grace; alternatively, the silicon compound may be, for example a silicone oil. The silicone oil may be any silicone oil, for example, SH® 200. Many crosslinked silicone compounds are commercially available and are useful for incorporation into the films of the present invention. These include, for example, the preferred crosslinked siloxane compound Tospearl® manufactured by Toshiba Silicone, Tokyo, Japan.

One or both of the exposed surfaces of the film of the present invention may be treated to provide the film of the present invention with further useful properties and functionalities. These include for example corona treatment and treatments that enhance receptivity for printing, especially for good compatibility with water based inks.

Optimum film characteristics for machining include a low coefficient of friction, COF (good slip properties) and low block, i.e. the film surfaces should not stick together and should not interfere with rolling and packing. These characteristics are imparted by the slip agents and the antiblock agents, respectively, of the films of the present invention.

In particular, the present invention provides a heat-sealable multilayer white opaque plastic film in which the core layer is cavitated and is formed from polypropylene. The film has a top tie layer of polypropylene and a whitening agent. This top tie layer is positioned adjacent to the first surface of the core layer. A top skin layer of polypropylene or a polyolefin terpolymer is positioned adjacent to the top tie layer. The top skin layer also contains SiO₂ and an antiblock agent. A bottom tie layer formed from polypropylene is postioned adjacent to the second surface of the core layer. A bottom skin layer formed from a polyolefin terpolymer is positioned adjacent to the bottom tie layer and contains SiO₂. The bottom skin layer may further contain one or more other antiblock agents or antiblock slip agents.

The core layer preferably includes from about 7% to about 9% cavitating agent, which may be any hard small particle compound, preferably PBT optimally present at 8%; from about 500ppm to about 700ppm of an antioxidant, preferably a phosphite, optimally present at 600ppm; and from about 200ppm to about 400ppm of an anti-condensing agent, preferably a fluoropolymer and optimally the fluoropolymer is present at 300ppm.

The top tie layer preferably include up to 10% TiO₂, preferably up to 8%, more preferably up to 6%, and optimally about 4% TiO₂.

The top skin layer preferably includes from about 0.1% to about 0.5% SiO₂, preferably from about 0.15% to about 0.4% SiO₂. more preferably from about 0.2% to about 0.3% SiO₂, and optimally about 0.23% SiO₂; and from about 0.1% to 0.5% of the antiblock agent, preferably from about 0.2% to about 0.4%, more preferably from about 0.15% to about 0.3% of the antiblock agent, and optimally about 0.2% of the antiblock agent.

The bottom skin layer preferably includes: EPB terpolymer and from about 0.6% to 2.4% of an antiblock agent which may be any antiblock agent, for example a silicone oil, preferably the antiblock agent comprises from about 0.9% to 1.8% of the bottom skin layer (optimally 12%); from about .05% to about .15% SiO₂ (optimally 0.1 % SiO₂); and from about 0.15% to about 0.3% of an antiblock slip agent, which may be any, antiblock slip agent, such as for example a crosslinked silicone (optimally comprising 0.23% of the layer).

In a yet further embodiment of the first aspect of the invention the total film thickness of the heat-sealable multilayer white opaque plastic film is about 1mil and the top skin layer constitutes about 2.5% of the total film thickness; the top tie layer forms about 15% of the total film thickness, the core layer accounts for about 63% of the total film thickness, the bottom tie layer forms about 15% of the total film thickness, and the bottom skin layer constitutes about 4% of the total film thickness.

In a particularly favored embodiment, the five layer white opaque plastic film of the present invention is heat sealable on one side and has the following composition: the top skin layer is corona treated and is formed from polypropylene and 0.23% Sylobloc® 45 (W.R. Grace, New York, NY) and 0.2% Epostar® MA1002; the top tie layer is formed from polypropylene and 4% Millenium RCL4®; the core layer is formed from polypropylene and includes 8% BPT, 600ppm Ultranox® 626 (Borg-Warner Chemicals Inc., Parkersburg, VA), and 300ppm of the fluoroplastic, Dyneon® fluoropolymer FX9613 (3M, St. Paul, MN); the bottom tie layer is also formed from polypropylene, and the bottom skin layer is formed from the EPB terpolymer, Chisso® 7753 and includes 1.2% SH200, 0.1%Sylobloc® 44 (W.R. Grace, New York, NY) and 0.23% Tospearl® 130 (Toshiba Silicone, Tokyo, Japan).

In another particularly favored embodiment, the five layer white opaque plastic film of the present invention is heat-sealable on two sides and has the following composition: the top skin layer is corona-treated and is formed from an EPB terpolymer, Chisso 7300 and includes 0.23% SiO₂ as Sylobloc® 45, 0.2% antiblock agent as Epostar® MA1002 (Cross-linked polymethacrylate, with a 2-3um average particle size; a refractive index of 1.49, and a specific gravity of 1.2), the top tie layer includes 4% TiO₂ as Millenium RCL4®; the core layer includes polypropylene and 8% of a cavitating agent, which is PBT; 600ppm of an antioxidant phosphite which is Ultranox® 626 and 300ppm of an anti-condensing agent which is the Dyneon® fluoropolymer FX9613, the bottom skin layer is formed from the EPB terpolymer, Chisso® 7753 (Chisso Corp., Osaka, Japan); and includes the antiblock agents, silicone oil. SH 200® at 1.2%, uncoated silica, Sylobloc® 44 (W.R. Grace, New York, NY) at 0.1% and 0.23% of the crosslinked silicone, Tospearl® 130 (Toshiba Silicone, Tokyo. Japan).

### EXAMPLES

### Example 1 (Comparative Example)

A three layer, one side heat sealable plastic film of the following composition was manufactured and provided for comparative purposes:

| ----------------------------This Surface Treated----------------------------------------------- | | |
|---|---|---|
| Layer 1 | Exxon® 4b12 PP + 4% Millenium RCL4® TiO₂ | 6.4 µm (25 ga) |
| Core | PP homopolymer of high stereo-regularity, e.g. Exxon® 4612 + 8% PBT cavitating agent: Ticona Celanese® 1300A or equivalent | 16.5 µm (65 ga) |
| Layer 2 | EPB terpolymer + 0.23% Sylobloc® 44 + 1.25% silicone fluid: 30,000 centistokes | 2.0 µm (8 ga) |

The layers were combined in the melt, quenched, reheated, and stretched to 5.3X in the machine direction. Subsequently, the sheet was reheated and stretched about 8-10X in a tenter frame. Skin I was corona treated to about 40 dynes and wound in a mill roll form.

### Example 2

The following one side heat-sealable, five layer film structure was produced according to the process of Example 1.

| ----------------------------This Surface Treated----------------------------------------------- | | |
|---|---|---|
| Layer A | PP + 0.23% Sylobloc® 45 + 0.2% Epostar® MA 1002 | 0.5-0.8 µm (2-3 ga) |
| Layer B | PP (Exxon® 4612) + TiO₂ (4% Millenium RCL4®) | 3.8 µm (15 ga) |
| Layer C | PP homopolymer of high stereo-regularity, such as Exxon® 4612 + 8% PBT cavitating agent (Ticona Celanese® 1300A or equivalent) | 15.5 µm (61 ga) |
| Layer D | PP (isotactic homopolymer) | 3.8 µm (15 ga) |
| Layer E | EPB terpolymer (with DSC melting point of 122.5°C) + 0.10% Sylobloc® 44 + 0.1% Tospearl® T130 + 1.25% silicone fluid (30,000 centistokes) | 1 µm (4 ga) |

### Example 3

The following two side heat-sealable, five layer film structure was produced accoring to the process of Example 1.

| ----------------------------This Surface Treated----------------------------------------------- | | |
|---|---|---|
| Layer A | EPB terpolymer (with DSC melting point of 137°C) + 0.23% Sylobloc® 45 + 0.2% Epostar® MA 1002 | 0.5-0.8 µm (2-3 ga) |
| Layer B | PP (Exxon® 4612) + TiO₂ (4% Millenium RCI*A*®) | 3.8 µm (15 ga) |
| Layer C | PP homopolymer of high stereo-regularity, such as Exxon® 4612. 8% PBT cavitating agent (Ticona Celanese® 1300A or equivalent) | 15.5 µm (61 ga) |
| Layer D | PP (isotactic homopolymer) | 3.8 µm (15 ga) |
| Layer E | EPB terpolymer + 0.10% Sylobloc® 44 + 0.1% Tospearl® T130 + 1.25% silicone fluid (30,000 centistokes) | 1 µm (4 ga) |

The films of Examples 2 and 3 have the following advantages over the film of comparative Example 1:
(a) The layer containing TiO₂ may be reduced from 6.4 µm (25 ga) in Layer 1 of Example 1 to 3.8 µm (15 ga) in Layer B of Examples 2 and 3, representing a 40% reduction in materials cost for this layer.
(b) The sealable layer may be reduced from 2 µm (8 ga) in Layer 3 of Example 1 to 1 µm (4 ga) of Layer E of Examples 2 and 3, representing a 50% lower material cost.

The film of Example 3 is heat sealable on two sides, with a somewhat peelable seal, and is suitable for ice cream sandwich applications.

To simulate film performance in manufacturing, the following tests were run:
1. COF (Coefficient of fricion).
2. Hot slip (Film on metal at high temperatures).
3. TiO₂ plate out testing ink adhesion monitoring on a Chestnut press (Flexo printing machine).
4. Fuji HFFS (Horizontal form, fill and seal): Testing for machinability.
5. Hayssen VFFS (Vertical form, fill and seal): Laminating a standard film (50LBW) to the test film sample(s) and testing hot tack with 454 g (16oz) kidney beans as the test load.

Table 1 lists the performance and properties of these films.

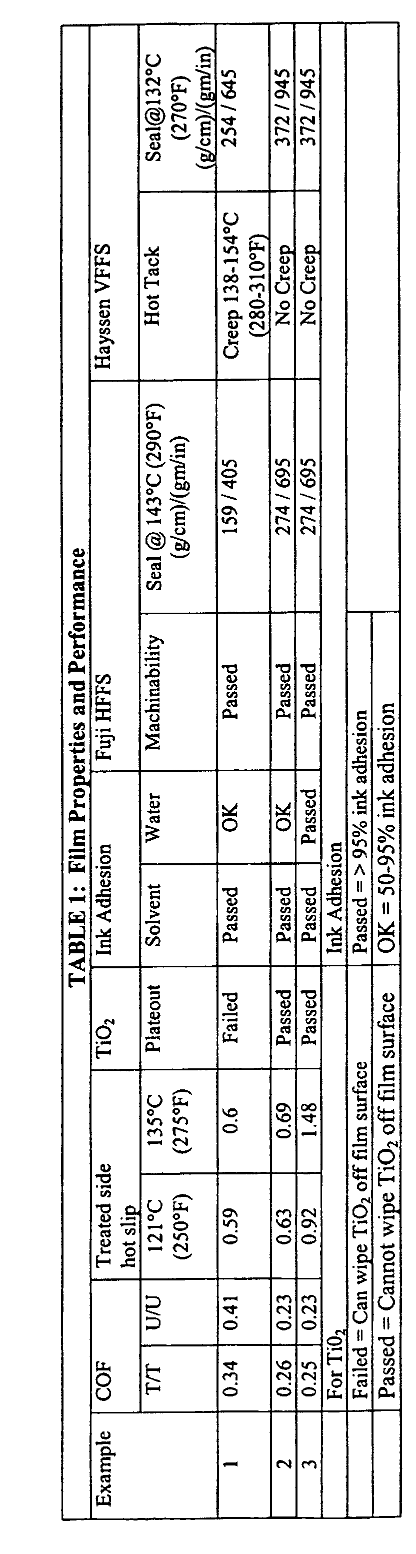

As can be seen from Table 1, the films of Examples 2 and 3 provide a significantly lower and more consistent COF then the film of Example 1. The films of Example 1 and Example 2 provide good hot slip properties and eliminate plate out of the TiO₂. The films of Example 2 provide good ink adhesion properties, while the films of Example 3 provide improved ink adhesion properties. The films of Example 2 and 3 provide good machineability. Finally, the films of Example 2 and 3 provide improved hot tack, and have improved z-tear performance (without creep), which is important for VFFS (Vertical form, fill and seal) applications.

## Claims

1. A heat-sealable multilayer white opaque plastic film, comprising:
i) a cavitated core layer comprising polypropylene homopolymer of high stereo-regularity and a cavitating agent comprising polybutylene terephthalate, said core layer having a first and a second surface;
ii) a top tie layer comprising polypropylene and TiO₂, said top tie layer being positioned adjacent to said first surface of the core layer;
iii) a top skin layer positioned adjacent to said top tie layer comprising SiO₂, methyl acrylate antiblock agent and a polymer selected from polypropylene or ethylene-propylene-butylene terpolymer;
iv) a bottom tie layer comprising polypropylene, said bottom tie layer being positioned adjacent to said second surface of the core layer; and
v) a bottom skin layer comprising an ethylene-propylene-butylene terpolymer, further comprises SiO₂, silicone oil antiblock, and crosslinked silicone slip agent; said bottom skin layer being positioned adjacent to said bottom tie layer.

2. The film according to claim 1 wherein:
i) the top skin layer comprises from 0.1% to 0.5% SiO₂ and from 0.1% to 0.5% of a second antiblock agent;
ii) the top tie layer comprises up to 10% TiO₂; and
iii) the core layer comprises from 7% to 9% polybutylene terephthalate. ,

3. The film according to claim 2 wherein:
i) the top skin layer comprises from 0.15% to 0.4% SiO₂ in the form of coated silica and from 0.15% to 0.25% methyl acrylate;
ii) the core layer comprises 8% polybutylene terephthalate; and the bottom skin layer comprises an ethylene-propylene-butylene terpolymer
iii) and further comprises from 0.6% to 2.4% silicone oil antiblock, and from 0.15% to 0.3% crosslinked silicone slip agent.

4. The film according to claim 3, wherein the core layer comprises from 500 ppm to 700 ppm phosphite antioxidant, and from 200 ppm to 400 ppm fluoropolymer anti-condensing agent.

5. The film according to any of the previous claims wherein the film's total thickness is is 1 mil and wherein
i) the top skin layer comprises 2.5% of the total film thickness;
ii) the top tie layer comprises 15% of the total film thickness;
iii) the core layer comprises 63% of the total film thickness;
iv) the bottom tie layer comprises 15% of the total film thickness; and
v) the bottom skin layer comprises 4% of the total film thickness.

6. A method of packaging a frozen novelty, comprising:
i) providing a frozen novelty;
ii) enclosing the frozen novelty in a film according to any of the previous claims; and,
iii) sealing the film to enclose the novelty.

## Patentansprüche

1. Heißsiegelbare, mehrschichtige, weiße, opake Kunststofffolie, die:
(i) eine mit Hohlräumen versehene Kernschicht, die Polypropylenhomopolymer mit hoher Stereoregularität und Polybutylenterephthalat umfassendes Kavitierungsmittel umfasst, wobei die Kernschicht eine erste und eine zweite Oberfläche aufweist,
(ii) eine obere Bindeschicht, die Polypropylen und TiO₂ umfasst, wobei die obere Bindeschicht an die erste Oberfläche der Kernschicht angrenzend angeordnet ist,
(iii) eine obere Hautschicht, die an die obere Bindeschicht angrenzend angeordnet ist und SiO₂, Methylacrylat-Antiblockmittel und Polymer ausgewählt aus Polypropylen oder Ethylen-Propylen-Butylen-Terpolymer umfasst,
(iv) eine untere Bindeschicht, die Polypropylen umfasst, wobei die untere Bindeschicht an die zweite Oberfläche der Kernschicht angrenzend angeordnet ist, und
(v) eine untere Hautschicht umfasst, die Ethylen-Propylen-Butylen-Terpolymer umfasst und ferner SiO₂, Silikonöl-Antiblock- und vernetztes Silikon-Gleitmittel umfasst, wobei die untere Hautschicht an die untere Bindeschicht angrenzend angeordnet ist.

2. Folie nach Anspruch 1, bei der:
(i) die obere Hautschicht 0,1 % bis 0,5 % SiO₂ und 0,1 % bis 0,5 % eines zweiten Antiblockmittels umfasst,
(ii) die obere Bindeschicht bis zu 10 % TiO₂ umfasst und
(iii) die Kernschicht 7 % bis 9 % Polybutylenterephthalat umfasst.

3. Folie nach Anspruch 2, bei der:
(i) die obere Hautschicht 0,15 % bis 0,4 % SiO₂ in Form von beschichtetem Siliciumdioxid und 0,15 % bis 0,25 % Methylacrylat umfasst,
(ii) die Kernschicht 8 % Polybutylenterephthalat umfasst und
(iii) die untere Hautschicht Ethylen-Propylen-Butylen-Terpolymer umfasst und ferner 0,6 % bis 2,4 % Silikonöl-Antiblock- und 0,15 % bis 0,3 % vernetztes Silikongleitmittel umfasst.

4. Folie nach Anspruch 3, bei der die Kernschicht 500 ppm bis 700 ppm Phosphit-Antioxidationsmittel und 200 ppm bis 400 ppm Fluorpolymer-Antikondensationsmittel umfasst.

5. Folie nach einem der vorhergehenden Ansprüche, bei der die Foliengesamtdicke 1 mil beträgt und bei der
(i) die obere Hautschicht 2,5 % der Gesamtfoliendicke ausmacht,
(ii) die obere Bindeschicht 15 % der Gesamtfoliendicke ausmacht,
(iii) die Kernschicht 63 % der Gesamtfoliendicke ausmacht,
(iv) die untere Bindeschicht 15 % der Gesamtfoliendicke ausmacht und
(v) die untere Hautschicht 4 % der Gesamtfoliendicke ausmacht.

6. Verfahren zum Verpacken von gefrorener Ware, bei dem
(i) gefrorene Ware bereitgestellt wird,
(ii) die gefrorene Ware in Folie gemäß einem der vorhergehenden Ansprüche eingeschlossen wird und
(iii) die Folie versiegelt wird, um die Ware einzuschließen.

## Revendications

1. Film multicouche thermosoudable de matière plastique opaque blanche, comprenant :
i) une couche centrale à cavitation comprenant un homopolymère de polypropylène de grande stéréorégularité et un agent de cavitation comprenant du polytéréphtalate de butylène, ladite couche centrale ayant des première et seconde surfaces ;
ii) une couche de liaison supérieure comprenant un polypropylène et du TiO₂, ladite couche de liaison supérieure étant placée en position adjacente à ladite première surface de la couche centrale ;
iii) une couche supérieure servant de pellicule placée en position adjacente à ladite couche supérieure de liaison, comprenant du SiO₂, un agent antibloquant consistant en acrylate de méthyle et un polymère choisi entre le polypropylène et un terpolymère éthylène-propylène-butylène ;
iv) une couche inférieure de liaison comprenant du polypropylène, ladite couche inférieure de fixation étant placée en position adjacente à ladite seconde surface de la couche centrale ; et
v) une couche inférieure servant de pellicule, comprenant un terpolymère éthylène-propylène-butylène, comprenant en outre du SiO₂, un agent antibloquant consistant en une huile de silicone, un agent de glissement consistant en une silicone réticulée ; ladite couche inférieure servant de pellicule étant placée en position adjacente à ladite couche inférieure de liaison.

2. Film suivant la revendication 1, dans lequel :
(i) la couche supérieure servant de pellicule comprend 0,1% à 0,5% de SiO₂ et 0,1% à 0,5% d'un second agent antibloquant ;
(ii) la couche supérieure de liaison comprend jusqu'à 10% de TiO₂ ; et
iii) la couche centrale comprend 7% à 9% de polytéréphtalate de butylène.

3. Film suivant la revendication 2, dans lequel :
(i) la couche supérieure servant de pellicule comprend 0,15% à 0,4% de SiO₂ sous forme de silice enrobée et 0,15% à 0,25% d'acrylate de méthyle.
(ii) la couche centrale comprend 8% de polytéréphtalate de butylène ; et
iii) la couche inférieure servant de pellicule comprend un terpolymère éthylène-propylène-butylène et comprend en outre 0,6% à 2,4% d'un agent antibloquant consistant en une huile de silicone, et 0,15% à 0,3% d'un agent de glissement consistant en une silicone réticulée.

4. Film suivant la revendication 3, dans lequel la couche centrale comprend 500 ppm à 700 ppm d'un antioxydant phosphite et 200 ppm à 400 ppm d'un agent anticondensation polymère fluoré.

5. Film suivant l'une quelconque des revendications précédentes, dans lequel l'épaisseur totale du film est égale à 1 mil et dans lequel
i) la couche supérieure servant de pellicule représente 2,5% de l'épaisseur totale du film ;
ii) la couche supérieure de liaison représente 15% de l'épaisseur totale du film ;
iii) la couche centrale représente 63% de l'épaisseur totale du film ;
iv) la couche inférieure de liaison représente 15% de l'épaisseur totale du film ; et
v) la couche inférieure servant de pellicule représente 4% de l'épaisseur totale du film.

6. Procédé pour emballer un article congelé, comprenant les étapes consistant :
i) à prendre un article congelé ;
ii) à enfermer l'article congelé dans un film suivant l'une quelconque des revendications précédentes ; et
iii) à obturer hermétiquement le film pour enfermer l'article.
